# EUROPÄISCHE PATENTSCHRIFT

(11) **EP 4 014 601 B1**
(45) Veröffentlichungstag und Bekanntmachung des Hinweises auf die Patenterteilung: **08.10.2025**
(21) Anmeldenummer: 20751121.3
(22) Anmeldetag: 03.08.2020
(51) Int. Cl.: H04W 56/00

(54) **VERFAHREN ZUM ÜBERTRAGEN VON DATEN ZWISCHEN EINEM KNOTEN UND EINER BASISSTATION IN EINEM KOMMUNIKATIONSSYSTEM SOWIE BASISSTATION SOWIE KNOTEN**
METHOD FOR TRANSMITTING DATA BETWEEN A NODE AND A BASE STATION IN A COMMUNICATION SYSTEM, AND BASE STATION AND NODE
PROCÉDÉ DE TRANSMISSION DE DONNÉES ENTRE UN NOEUD ET UNE STATION DE BASE DANS UN SYSTÈME DE COMMUNICATION, ET STATION DE BASE ET NOEUD

(30) Priorität: 13.08.2019 DE 102019005686
(43) Veröffentlichungstag der Anmeldung: 22.06.2022
(73) Patentinhaber: Diehl Metering Systems GmbH, 90451 Nürnberg (DE)
(72) Erfinder: PETKOV, Hristo, 90425 Nürnberg (DE); LAUTENBACHER, Thomas, 91058 Erlangen (DE); KAUPPERT, Thomas, 90455 Nürnberg (DE); MZYK, Raphael, 91126 Kammerstein (DE)
(74) Vertreter: Diehl Patentabteilung
(86) Internationale Anmeldenummer: PCT/EP2020/071799
(87) Internationale Veröffentlichungsnummer: WO 2021/028249

(56) Entgegenhaltungen:
- US-A1- 2009 201 152
- US-A1- 2010 075 611
- US-A1- 2016 164 745

## Beschreibung

Die vorliegende Erfindung betrifft ein Verfahren zum Übertragen von Daten zwischen zumindest einem Knoten und einer Basisstation in einem Kommunikationssystem mit bidirektionalem Funkübertragungsbetrieb. Die Erfindung betrifft ferner einen entsprechend hergerichteten Knoten. Die Erfindung eignet sich insbesondere für den Einsatz bei der Erfassung des Verbrauchs von Wärme bzw. Energie, Strom, Gas oder Wasser durch autarke Verbrauchsmessgeräte.

### Technologischer Hintergrund

Knoten eines Kommunikationssystems wie z. B. intelligente Verbrauchsmessgeräte sind üblicherweise lokalen Positionen wie z. B. jeweils Wohneinheiten oder Wohnhäusern zugeordnet. Die dort anfallenden Messdaten können auf unterschiedlichste Weise ausgelesen werden. Messdaten können z. B. über das Stromnetz (Power Line) ausgelesen werden. Die Einbindung der Verbrauchsmessgeräte in ein überörtliches Netzwerk ist hierbei allerdings nicht möglich. Ferner können Messdaten mittels Mobilfunktechnologie in Form von Datenpaketen oder Telegrammen übertragen werden. Dies ist allerdings teuer, setzt die Installation von Mobilfunkmodulen an den Verbrauchsmessgeräten voraus und hat Nachteile betreffend den hohen Stromverbrauch an den einzelnen Verbrauchsmessgeräten. Ferner können Messdaten in Form von Datenpaketen oder Telegrammen auch per Funk, beispielsweise im ISM (Industrial, Scientific, Medical)-Band-Frequenzbereich oder im SRD (Short Range Devices)-Band-Frequenzbereich, übertragen werden. Diese Frequenzbereiche haben den Vorteil, dass von den Betreibern lediglich eine allgemeine Zulassung der Frequenzverwaltung notwendig ist. Allerdings besteht das Problem, dass aufgrund der Häufigkeit der Verwendung derartiger Frequenzbereiche für unterschiedlichste technische Einrichtungen wie etwa Garagentorsteuerungen, Babyphones, Alarmanlagen, WLAN, Bluetooth, Rauchwarnmelder usw. es häufig zu Störungen kommen kann. Das Sammeln der Messdaten per Funk erfolgt entweder durch ortsfeste oder mobile Datensammler (Basisstationen oder Kollektoren), an die die in den Sendern der Verbrauchsmessgeräte bereitgestellten Messdaten übertragen werden.

Hierbei werden von Verbrauchsmessgeräten Messdaten in bestimmten, sehr kurzen Stichzeiträumen (Stichzeit bzw. Stichzeitpunkt inklusive Zeitabweichung) an einen Datensammler übertragen und die in diesen Stichzeiträumen empfangenen Messdaten für eine Verbrauchsauswertung herangezogen. Eine besondere Herausforderung besteht hierbei darin, dass eine Kommunikation zwischen Datensammler und Verbrauchsmessgeräten eine sehr genaue Zeitsynchronisation zwischen den im Bereich der Verbrauchsmessgeräte befindlichen Oszillatoren und denjenigen des Datensammlers benötigt. Für Oszillatoren autonomer Verbrauchsmessgeräte werden als Frequenzgeber (mit einer Zeiterfassungsfunktion einer Frequenzreferenzeinrichtung) einfache Quarze mit relativ niedriger Frequenz und entsprechend geringem Stromverbrauch eingesetzt. Derartige Quarze weisen aufgrund von Fertigungstoleranzen, Temperaturverhalten und Alterung Quarzfehler von ca. 10 - 100 ppm auf. Beispielsweise führt bei einem Standardquarz ein Quarzfehler von 50 ppm zu einer Abweichung von 4,3 Sekunden pro Tag bzw. 26 Minuten pro Jahr. Daraus wiederum resultiert bereits eine Abweichung der Zeitsynchronisation bei geringen Temperaturschwankungen, die sich auch schon bei sehr kurzen Zeiträumen bemerkbar machen. Die Folge ist ein schlechter Empfang.

Bei einer bidirektionalen Übertragung erfolgt nach einer Uplink-Übertragung von den Knoten zur Basisstation eine schmalbandige Downlink-Übertragung von Daten von der Basisstation an die jeweiligen Knoten statt. Bei den im Downlink übertragenen Daten handelt es sich zum Beispiel um eine Bestätigung des Empfangs eines Datenpakets oder Telegramms durch die Basisstation, um eine Anfrage, ob beispielsweise noch weitere Daten von dem jeweiligen Knoten zur Basisstation übertragen werden, um Steuertelegramme oder um sonstige an den jeweiligen Knoten zu übertragende Daten/Informationen. Sowohl im Uplink als auch im Downlink erfolgt die Übertragung der Daten per Telegramm nicht am Stück. Vielmehr wird das Telegramm in einzelne Datenpakete mit einer im Vergleich zum Telegramm geringeren Länge aufgeteilt, welche anschließend einzeln in zeitlichem Abstand zueinander nacheinander übertragen werden und im Empfänger decodiert bzw. rekombiniert werden. Hierbei besteht beim Downlink das besondere Problem, dass die Anzahl der Datenpakete größer ist als beim Uplink und die Dauer der Übertragung der einzelnen Datenpakete daher länger dauert. Ferner muss die Trägerfrequenz der Datenpakete sehr genau der vom Knoten erwarteten Trägerfrequenz entsprechen, damit der Einfluss des Rauschens möglichst unterdrückt werden kann. Schließlich muss der Knoten sein Empfangsfenster für den Downlink zum erwarteten Zeitpunkt öffnen, was jedoch aufgrund des temperaturbedingten Verziehens der Frequenz des Knoten-seitigen Frequenzgebers eine zusätzliche Schwierigkeit darstellt. Dementsprechend kann sich bedingt durch die Temperatur und die fortschreitende Zeit bis zum Empfang des letzten Datenpakets eines Telegramms im Downlink ein Frequenzversatz und/oder ein Zeitversatz einstellen, der einen guten Empfang der Datenpakete im Downlink erschwert oder sogar unmöglich macht.

### Druckschriftlicher Stand der Technik

Ein Verfahren gemäß dem Oberbegriff des Anspruchs ist aus der DE 10 2005 020 349 B4 bekannt. Bei dem dort beschriebenen Verbrauchserfassungssystem besitzen die Verbrauchsmessgeräte einen ersten Zeittaktgeber (Uhrzeittaktgeber) mit niedrigerem Stromverbrauch für den Dauerbetrieb sowie einen zweiten Taktgeber mit höherer Frequenzstabilität und höherem Stromverbrauch, welcher lediglich in kurzen Aktivierungsphasen betrieben wird. Gemäß der dort beschriebenen Idee wird im Verbrauchsmessgerät während der kurzen Aktivierungsphasen des zweiten Taktgebers die Frequenz, die Periodendauer oder eine daraus abgeleitete Größe als ein Taktmaß des ersten Zeittaktgebers auf der Basis eines vom zweiten Zeittaktgeber abgeleiteten Vergleichsmaßstabs erfasst und die ackumulierte Zeit des ersten Zeittaktgebers in Abhängigkeit der festgestellten Abweichung korrigiert. Daraus resultiert, dass der zeitliche Fehler dann dem zeitlichen Fehler des zweiten Taktgebers des Verbrauchsmessgeräts entspricht.

Die US 2009/0201152 A1 offenbart ein manipulationsgesichertes Containerlokalisierungssystem unter Verwendung von jeweils an unterschiedlichen Positionen des Containers angebrachten Micro-Transpondern sowie einer Basisstation. Ein erster Micro-Transponder versendet in einem Analysemodus zu einem ersten Zeitpunkt ein anfängliches Paket und empfängt Funksignale bezüglich eines nachfolgenden Pakets zu einem nachfolgenden zweiten Zeitpunkt. Aus dem Zeitunterschied zwischen dem ersten Zeitpunkt und zweiten Zeitpunkt wird eine Entfernung zwischen erstem und zweiten Micro-Transponder bestimmt. Ferner empfängt der zweite Micro-Transponder Funksignale bezüglich des ersten Pakets und nimmt eine Anpassung der Zeit sowie der Trägerfrequenz für das nachfolgend zu versendende Paket vor.

US 2016/0164745 A1 betrifft ein Verfahren für eine kabelgebundene oder kabellose Kommunikation zwischen einer Basisstation und einer Vielzahl von in unterschiedlicher Entfernung zur Basisstation angeordneter Teilnehmerstationen. Um einen Vielfachzugriff von Seiten der Teilnehmerstationen zu ermöglichen, werden die Daten fragmentiert und die Datenfragmente in einer für die Übertragung notwendigen Anzahl von Zeitschlitzen im Uplink nacheinander gesendet und im Empfänger rekombiniert.

Aus der US 2010/0075611 A1 ist ein Verfahren sowie eine Vorrichtung zur drahtlosen Kommunikation für eine mehrere Knoten sowie ein Gateway umfassende industrielle Prozesssteuerung bekannt. Im Empfänger des Gateways werden Datenpakete aus kombinierten Basisband-Signalen extrahiert ist. Ferner ist eine Zeitsynchronisationseinheit vorgesehen, welche eine Bit-Timing-Synchronisation vollzieht und eine Synchronisation mit dem Zeittakt der übertragenen Daten vornimmt. Eine Sampling-Zeitfehler-Korrektureinrichtung korrigiert einen Sampling-Zeitfehler in den demodulierten Basisband-Signalen.

Die DE 10 2010 031 411 A1 sowie die EP 2 751 526 B1 beschreiben ein Konzept zur drahtlosen Übertragung von Nutzdaten, bei dem die Nutzdaten in eine Mehrzahl kanalkodierter Datenpakete aufgeteilt und innerhalb eines Zeitintervalls von einem Knoten über einen Drahtloskommunikationskanal zu einer Basisstation übertragen werden. In der Basisstation werden die Datenpakete dekodiert und wieder zu den Nutzdaten kombiniert. Gemäß der EP 2 751 526 B1 kann der Knoten zum Erzeugen von Datenpaketen dahingehend ausgebildet sein, eine Synchronisationssequenz in Teilsynchronisationssequenzen aufzuteilen und jedes Datenpaket mit einer der Teilsynchronisationssequenzen zu versehen. Synchronisationssequenzen sind deterministische oder pseudozufällige binäre Datenfolgen, die zusammen mit den eigentlichen Nutzdaten bzw. Sensordaten in den Datenpaketen an die Basisstation gesendet werden. Der Basisstation sind die Synchronisationssequenzen bekannt. Durch Korrelation des Empfangsdatenstroms mit der bekannten Synchronisationssequenz kann die Basisstation die zeitliche Position der bekannten Synchronisationssequenz in dem Empfangsdatenstrom ermitteln. Um die Datenpakete kurz zu halten, kann hierbei die Synchronisationssequenz über die einzelnen kurzen Datenpakete verteilt werden, so dass das einzelne Datenpaket schlechtere Synchronisationseigenschaften aufweist, als die Synchronisation über mehrere Datenpakete.

In der DE 10 2016 205 052 A1 wird zur Verbesserung der Kanalauslastung ein Datensender vorgeschlagen, der ausgebildet ist, um unter Verwendung eines zusätzlichen Sendedatenpakets, welches in einer Lücke oder Pause zwischen zwei Sendedatenpaketen versendet wird, einem anderen Datensender einen Sendezeitpunkt, zu dem der andere Datensender ein Sendedatenpaket aussendet, oder einen zeitlichen Abstand zwischen zwei von dem anderen Datensender ausgesendeten Sendedatenpaketen vorzugeben.

Gemäß der DE 10 2016 009 197 B3 wird zum Übertragen von Telegrammen von einem Datensammler an ein Messgerät im Datensammler die senderseitige Referenzfrequenz um die Frequenzdifferenz zwischen der Datensammler-seitigen Referenzfrequenz und einer Messgeräte-seitigen Referenzfrequenz nach Erhalt eines Datentelegramms vom Messgerät verschoben.

Die DE 10 2018 004 828 A1 beschreibt ein Verfahren zum Übertragen von Daten zwischen einem Endgerät und einem Datensammler per Funk, bei dem nach dem Aufbau der Kommunikation das Endgeräte eine Nachricht an den Datensammler sendet und der Datensammler nach Empfang der Nachricht die Übertragung der Daten aufgrund des Inhalts der Nachricht während der Kommunikation fortsetzt, unterbricht oder beendet.

### Aufgabe der vorliegenden Erfindung

Die Aufgabe der vorliegenden Erfindung besteht darin, die Empfangsqualität im Downlink zu verbessern.

### Lösung der Aufgabe

Die vorstehende Aufgabe wird durch die Merkmale des Verfahrens gemäß Anspruch 1 gelöst. Zweckmäßige Ausgestaltungen des erfindungsgemäßen Verfahrens sind in den abhängigen Ansprüchen beansprucht.

Gemäß der Erfindung findet zwischen den Downlink Datenpaketen eine Korrektur des Sendezeitpunkts und/oder der Trägerfrequenz mindestens eines der Datenpakete statt. Damit sind Basisstation und Knoten in der Lage, die Übertragung der einzelnen nacheinander zu versendenden Datenpakete hinsichtlich der zeitlichen Lage des Empfangsfensters des Knotens sowie des Sendezeitpunkts der Datenpakete und/oder hinsichtlich der Trägerfrequenz wesentlich genauer abzustimmen als dies bisher möglich war. Hierdurch kann die Qualität der Übertragung von Daten im Downlink trotz der gegebenen Schwierigkeiten erheblich verbessert werden. Die Erfindung eröffnet auch die Möglichkeit, den zeitlichen Abstand der Datenpakete zu spreizen d. h. auseinander zu ziehen, da der Einfluss der Zeit und/oder der Temperatur durch das erfindungsgemäße Verfahren kompensiert werden kann. Ein Spreizen des zeitlichen Abstands der Datenpakete bzw. ein Auseinanderziehen derselben in der zeitlicher Abfolge hat wiederum den Vorteil, dass erheblich günstigere Energiepuffer in den Knoten zum Einsatz kommen können, da die zur Verfügung stehende elektrische Energie des Energiepuffer nicht mehr für die Verarbeitung einer Vielzahl von Datenpaketen innerhalb einer sehr kurzer Zeitspanne abgerufen werden muss, da die Zeitspanne nun gestreckt werden kann.

Für die Übertragung der Datenpakete im Downlink findet vorzugsweise eine Kalibrierung des zweiten Knotenfrequenzgebers über den ersten Knotenfrequenzgeber statt, wodurch ein durch den zweiten Knotenfrequenzgeber bedingter Zeitversatz beseitigt wird.

Erfindungsgemäß wird für die Korrektur vom Knoten zwischen den Datenpaketen ein Zwischenkalibrierungspaket im Uplink an die Basisstation übertragen, so dass die Basisstation weiß, dass diese Kalibrierung stattgefunden hat. Die Basisstation kann somit ab diesem Zeitpunkt die Zeitabstände der Datenpakete innerhalb der Übertragungssequenz derselben korrigieren.

Vorzugsweise wird bei der Übertragung des Zwischenkalibrierungspakets auch eine Kalibrierung des ersten Knotenfrequenzgebers und des ersten Basisstationsfrequenzgebers , also der beiden hochfrequenten Frequenzgeber für die Trägerfrequenz, durchgeführt. Hierdurch kann die Trägerfrequenz der Datenpakete genau abgestimmt werden. Daraus resultiert ein verbessertes Signal/Rauschverhältnis beim schmalbandigen Empfang der Datenpakete.

In der Regel weist auch die Basisstation ebenso wie der Knoten einen zweiten Basisstationsfrequenzgeber (Zeitquarz) auf, dessen Frequenz geringer ist als diejenige des ersten Basisstationsfrequenzgebers. Zweckmäßigerweise kann als Folge der Übertragung des Zwischenkalibrierungspakets hierbei zusätzlich auch eine Kalibrierung des zweiten Basisstationsfrequenzgebers über den ersten Basisstationsfrequenzgebers durchgeführt werden. Damit kann die Abstimmung der Sendezeitpunkte sowie des Empfangsfensters zusätzlich verbessert werden.

Vorzugsweise wird das Zwischenkalibrierungspaket zwischen zwei Datenpaketen der Mehrzahl der Datenpakete versendet. Die vorbeschriebene Zeit- und/oder Trägerfrequenzkompensationen können daher innerhalb der Sequenz eines Datentelegramms vorgenommen werden, sodass der nachteilige Effekt der Zeitdauer der Übertragung eines Datentelegramms und der daraus resultierenden insbesondere temperaturbedingten Frequenzabweichungen beseitigt werden kann.

Als Folge des Empfangs des Zwischenkalibrierungspakets kann die Basisstation jeweils den Sendezeitpunkt und/oder die Trägerfrequenz der nach Erhalt des Zwischenkalibrierungspakets zu erzeugenden Datenpakete nachjustieren.

Darüber hinaus kann als Folge der Kalibrierung des ersten Knotenfrequenzgebers und des zweiten Knotenfrequenzgebers der Knoten den Empfangszeitpunkt für die nach Versenden des Zwischenkalibrierungspakets erwarteten Datenpakete nachjustieren.

Insbesondere kann die Kalibrierung des ersten Knotenfrequenzgebers und zweiten Knotenfrequenzgebers bei der Bereitstellung des Zwischenkalibrierungspakets im Knoten erfolgen.

Insbesondere kann weiterhin beim Empfang des Zwischenkalibrierungspakets in der Basisstation die Kalibrierung des jeweils ersten Knotenfrequenzgebers und ersten Basisstationsfrequenzgebers erfolgen.

Zweckmäßigerweise hat bei der Übertragung der Datenpakete im Uplink zeitlich vor dem Zwischenkalibrierungspaket bereits eine Kalibrierung des ersten Knotenfrequenzgebers und zweiten Knotenfrequenzgebers und/oder eine Kalibrierung des ersten Knotenfrequenzgebers und des zweiten Basisstationsfrequenzgebers und/oder einer Kalibrierung des ersten Basisstationsfrequenzgebers und des zweiten Basisstationsfrequenzgebers stattgefunden, sodass die im Rahmen der Übertragung des Zwischenkalibrierungspakets erfolgenden Kalibrierungen jeweils lediglich Nachjustierungen zu den vorgenannten Kalibrierungen darstellen. Es erfolgt somit bei der Kalibrierung im Rahmen der Übertragung des Zwischenkalibrierungspakets keine Nachschätzung früherer Fehler (z.B. Hardware-Fehler, Korrektur der Differenz zur Schätzung oder dergleichen).

Vorzugsweise kann ein Zwischenkalibrierungspaket wiederholt versendet werden. Hierdurch wird eine erhöhte Empfangswahrscheinlichkeit sichergestellt, falls ein Zwischenkalibrierungspaket im Uplink aufgrund eines Störeinflusses oder dergleichen verloren geht.

Gemäß einer zweckmäßigen Ausgestaltung des erfindungsgemäßen Verfahrens erfolgt die Korrektur des Sendezeitpunkts und/oder der Trägerfrequenz der Downlink Datenpakete in der zeitlichen Abfolge derselben mehrfach. Hierdurch kann eine kontinuierliche Zeit- und/oder Trägerfrequenzjustierung erfolgen.

Zweckmäßigerweise ist das Zwischenkalibrierungspaket deutlich kürzer als ein herkömmliches Datenpaket eines Telegramms, um die Empfangswahrscheinlichkeit desselben im Übertragungskanal zu erhöhen. Insbesondere kann hierdurch auch die Basisstation auf ein entsprechendes Zwischenkalibrierungspaket schneller reagieren als bei einem herkömmlichen Datenpaket im Uplink.

Als Zwischenkalibrierungspaket können ausschließlich Piloten (dem Knoten sowie der Basisstation bekannte Bits bzw. Bit-Folgen) und/oder ID-Daten und/oder Paketkerndaten versendet werden. Hierbei geht man davon aus, dass sich die Frequenz nur minimal geändert hat (z. B. < 10 Hz), so dass auch ohne ID überprüft werden kann, dass es sich um denselben Knoten (Zähler) handelt.

Zweckmäßigerweise ist die mittlere (d. h. durchschnittliche) Pause zwischen zwei Datenpaketen der Downlink Datenpakete größer 500 ms, vorzugsweise größer 700 ms, besonders vorzugsweise größer 900 ms.

Vorzugsweise kann jeweils der Unterschied zwischen einer Kalibrierung des ersten Knotenfrequenzgebers und zweiten Knotenfrequenzgebers und/oder einer Kalibrierung des ersten Knotenfrequenzgebers und des ersten Basisstationsfrequenzgebers und/oder eine Kalibrierung des ersten Basisstationsfrequenzgebers und des zweiten Basisstationsfrequenzgebers einer vorherigen Übertragung von Datenpaketen mit einer entsprechenden nachfolgenden Kalibrierung unter Verwendung eines Zwischenkalibrierungspakets hinsichtlich seines Frequenzunterschieds festgestellt und in der Basisstation und/oder im Knoten berücksichtigt werden. Insbesondere kann der diesbezügliche Unterschied der Kalibrierung des ersten Knotenfrequenzgebers und des ersten Basisstationsfrequenzgebers für die Korrektur der Trägerfrequenz in der Basisstation berücksichtigt werden.

Die vorliegende Erfindung betrifft ferner einen Knoten gemäß den Merkmalen des Anspruchs 16.

### Beschreibung der Erfindung anhand von Ausführungsbeispielen

Nachstehend werden besondere Ausgestaltungen der vorliegenden Erfindung unter Bezugnahme auf Zeichnungsfiguren näher erläutert. Wiederkehrende Merkmale sind der Übersichtlichkeit halber lediglich einmal mit einem Bezugszeichen versehen. Es zeigen:
- Fig. 1: eine stark vereinfachte schematische Darstellung eines Beispiels eines Kommunikationsnetzwerks mit einer Basisstation und mehrerer zugehöriger Knoten;
- Fig. 2: eine stark vereinfachte Darstellung eines Beispiels einer Basisstation für ein Kommunikationsnetzwerk gemäß Fig. 1;
- Fig. 3: eine stark vereinfachte schematische Darstellung des Kalibrierungs-Grundprinzips der vorliegenden Erfindung;
- Fig. 4: eine stark vereinfachte schematische Darstellung der Versendung eines Zwischenkalibrierungspakets gemäß einer beispielhaften Ausführungsform der Erfindung, sowie
- Fig. 5: eine stark vereinfachte schematische Darstellung von Beispielen verschiedener Formen eines Zwischenkalibrierungspakets gemäß der Erfindung im Vergleich zu einem herkömmlichen Datenpaket.

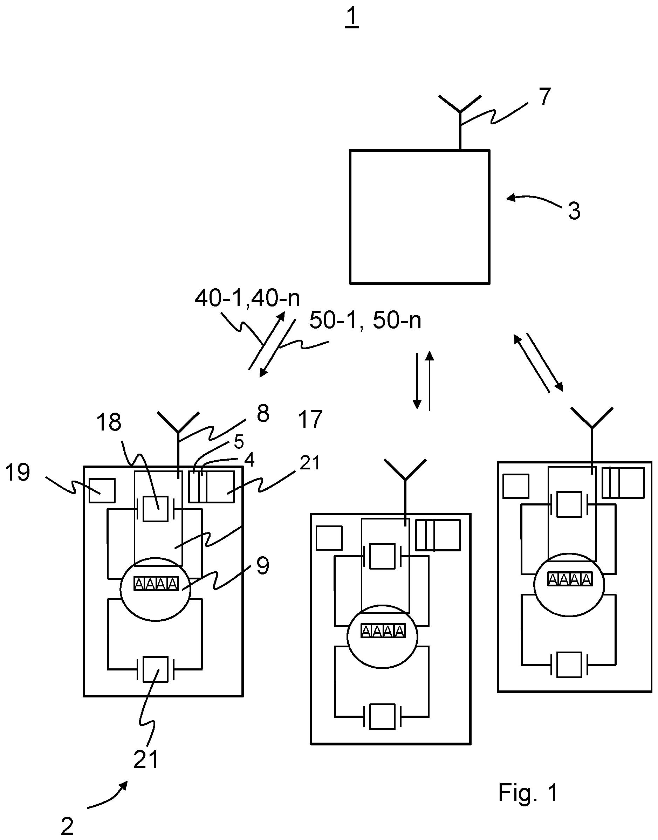

Bezugsziffer 1 in Fig. 1 bezeichnet ein Funkkommunikationssystem bzw. Funckommunikationsnetzwerk, welches eine Basisstation 3, z.B. einen sogenannten Datensammler, sowie eine Mehrzahl von einzelnen, autark betriebenen Knoten 2 umfasst. Bei den Knoten 2 handelt es sich beispielsweise um Sensoreinrichtungen oder Zähler jeglicher Art, beispielsweise Wasserzähler, Wärmezähler, Gaszähler oder Stromzähler, oder um Aktoren. Gemein ist diesen Knoten 2, dass sie über ein Kommunikationsmodul 17 mit Antenne 8 sowie eine Steuer- und Recheneinheit 19 verfügen. Des Weiteren verfügt jeder Knoten 2 über einen ersten Knotenfrequenzgeber 18 zur Erzeugung einer Trägerfrequenz für die Funkübertragung sowie einen zweiten Knotenfrequenzgeber 21, welcher der zur Festlegung der Zeitpunkte der Aussendung von Datenpaketen 40-1, 40-n im Uplink sowie für die Festlegung des Empfangsfensters zum Empfang von Datenpaketen 50-1, 50-n im Downlink dient. Bei dem ersten Knotenfrequenzgeber 18 handelt es sich um einen HF(Hochfrequenz)-Quarz, welcher üblicherweise einen Fehler in der Größenordnung von 20 ppm aufweist. Demgegenüber handelt es sich bei dem zweiten Knotenfrequenzgeber 21 um einen LF(Niederfrequenz)-Quarz, auch Zeitquarz genannt, welcher typischerweise einen Fehler in der Größenordnung von 100 ppm aufweist. Dies entspricht einem zeitlichen Fehler von 100 µs/s.

Der zweite Knotenfrequenzgeber 21 des Knotens 2 muss aufgrund der Zeitmess- bzw. Zeitgeberfunktion immer aktiv sein, wohingegen der erste Knotenfrequenzgeber 18 lediglich im Sendebetrieb und/oder Empfangsbetrieb aktiviert sein muss. Ansonsten befindet er sich in einem Sleepmodus. Jeder Knoten 2 wird energieautark betrieben, d.h. verfügt über eine Batterie 22, über die die einzelnen Funktionseinheiten des Knotens 1 mit Energie versorgt werden. Das Kommunikationsmodul 17 bzw. die Steuer- und Recheneinheit 19 wird hierbei nicht direkt von der Batterie 22 sondern von einem Energiepuffer 5 mit elektrischer Energie versorgt. Letzterer wird über eine Ladeeinheit 4 bzw. einen Ladeschaltkreis, zu dem die Batterie 22 gehört, mit elektrischer Energie versorgt d. h. aufgeladen.

Jeder Knoten 2 kann beispielsweise, falls dies gewünscht ist, auch mit einer Anzeige 9 versehen sein.

Das Funkkommunikationssystem 1 gemäß Fig. 1 wird bidirektional betrieben. Im Uplink werden Datenpakete 40-1, 40-n von dem jeweiligen Knoten 2 an die Basisstation 3 übertragen und dort über deren Antenne 7 empfangen. Im Downlink werden Datenpakete 50-1, 50-n von der Basisstation an jeden einzelnen Knoten 2 übertragen und von deren Antennen 8 empfangen.

Vorzugsweise wird für die Datenübertragung das SRD-Band oder das ISM-Band verwendet, welche lizenzfrei Frequenzbandbreiten für verschiedenste Anwendungen ermöglichen.

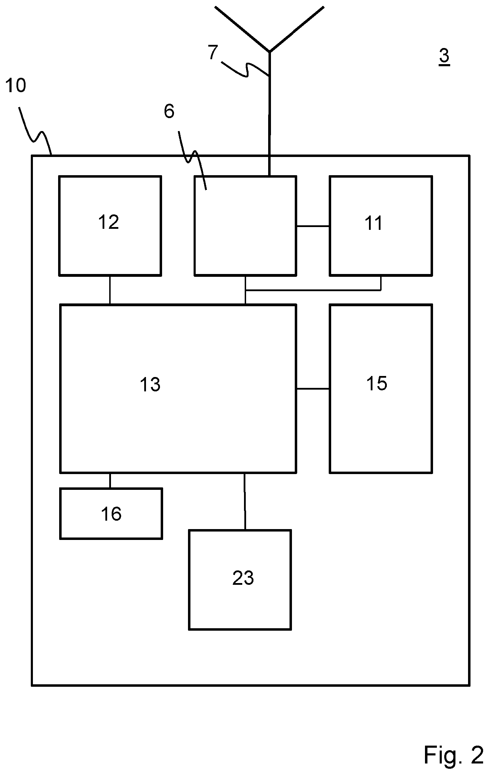

Fig. 2 zeigt in stark vereinfachter schematischer Darstellungsweise einen beispielhaften Aufbau einer energieautark betriebenen Basisstation 3 des Kommunikationssystems 1 gemäß Fig. 1. Die Basisstation 3 umfasst ein Sende- und Empfangsteil 6 mit einer Antenne 7 sowie einen Mikroprozessor 13, welcher über einen Speicher 15 verfügt und die Anzeige 23 ansteuert.

Des Weiteren verfügt die Basisstation 3 über einen ersten Basisstationsfrequenzgeber 11 in Form eines HF(Hochfrequenz)-Quarzes sowie einen zweiten Basisstationsfrequenzgeber 12 in Form eines LF(Niederfrequenz)-Quarzes. Der zweite Basisstationsfrequenzgeber 12 dient zur Zeiterfassung und ist deshalb analog zu dem zweiten Knotenfrequenzgeber 21 des jeweiligen Knotens 2 stets aktiv. Der zweite Basisstationsfrequenzgeber 12 besitzt typischerweise ebenfalls einen Fehler in der Größenordnung 100 ppm. Der Fehler des ersten Basisstationsfrequenzgebers 11 liegt im Bereich von 20 ppm.

Demgegenüber ist der erste Basisstationsfrequenzgeber 11 analog dem ersten Knotenfrequenzgeber 18 des jeweiligen Knotens 2 lediglich zu Zeiten aktiviert, in denen das Sende- und Empfangsteil 6 ein Empfangsfenster zum Empfang der Datenpakete 40-1, 40-n der jeweiligen Knoten 2 öffnet.

Bei der Energiequelle 16 handelt es sich vorzugsweise um eine Batterie, insbesondere um eine Batterie mit einer Kapazität von max. 80 Ah. Um mit einer solchen Energiequelle eine autarke Betriebsdauer über mehrere Jahre zu erreichen, darf die Basisstation 3 nicht immer aktiviert sein. Die Basisstation 3 bzw. dessen Sende- und Empfangsteil 6 sollte lediglich dann aktiviert sein, also ein Empfangsfenster bilden, wenn der jeweilige Knoten 2 Datenpakete 40-1, 40-n an die Basisstation 3 übermittelt oder die Basisstation 3 Datenpakete 50-1, 50-n im Downlink versendet. In den restlichen Zeiträumen sollte das Sende- und Empfangsteil 6 des Kommunikationsmoduls 10 der Basisstation 3 sich in dem Sleepmodus befinden.

Ein für den jeweiligen zweiten Frequenzgeber 21 bzw. 12 einzusetzender Zeitquarz hat typischerweise einen Fehler in der Größenordnung von 100 ppm. Dies entspricht einem zeitlichen Fehler von 100 µs/sek. Unter der Annahme, dass das nächste Datenpaket in einer Stunde kommen wird, ergibt dies über die Dauer einer Stunde einen Fehler von 360 ms (60 x 60 x 100 µs). Ein Datenpaket ist ungefähr 10 ms lang. Der Overhead nach einer Stunde wäre dann ca. 3.600 %.

Die Kalibrierung des Zeitquarzes ergibt typischerweise einen Restfehler in der Größenordnung von 20 ppm. Dieser Fehler wäre somit fünf Mal kleiner als der eingangs genannte Fehler und ergäbe einen Fehler von 72 ms oder 720 % der Länge des Datenpakets von 10ms.

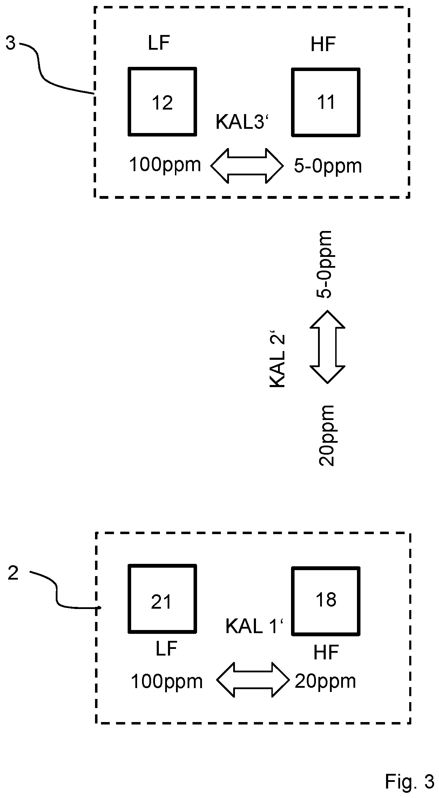

Fig. 3 zeigt im Bereich des Knotens 2 eine Kalibrierung KAL1', mit der in der DE 10 2005 020 349 B4 beschriebenen Verfahrensweise die Abweichung im Knoten zwischen dem zweiten Knotenfrequenzgeber 21 und dem ersten Knotenfrequenzgeber 18 von ca. 100 ppm auf 20 ppm reduziert werden kann.

Ferner wird KAL2' beim Empfang eines Datenpaktes 40-1, 40-n des jeweiligen Knoten 2 eine Kalibrierung zwischen dem ersten Basisstationsfrequenzgeber 11 und dem ersten Knotenfrequenzgeber 18 vorgenommen und in der Basisstation 3 abgespeichert. Hierdurch kann der Fehler in der Basisstation 3 von 20 ppm deutlich reduziert werden, nämlich theoretischer Weise auf einen Fehler von 0 ppm. Da jedoch das Kalibrierungsverfahren in der praktischen Umsetzung lediglich eine endliche Genauigkeit aufweist (beispielsweise aufgrund von Temperaturschwankungen und dergleichen) ist realistisch eine Reduzierung auf einen Bereich von 5-0 ppm anzustreben.

Die hierdurch erreichte zusätzliche Steigerung der Genauigkeit entspricht daher nochmals einem Faktor von mindestens 4.

Gemäß der Erfindung wird darüber hinaus eine Kalibrierung KAL3' des zweiten Basisstationsfrequenzgebers 12 und dem ersten Basisstationsfrequenzgeber 11 durchgeführt.

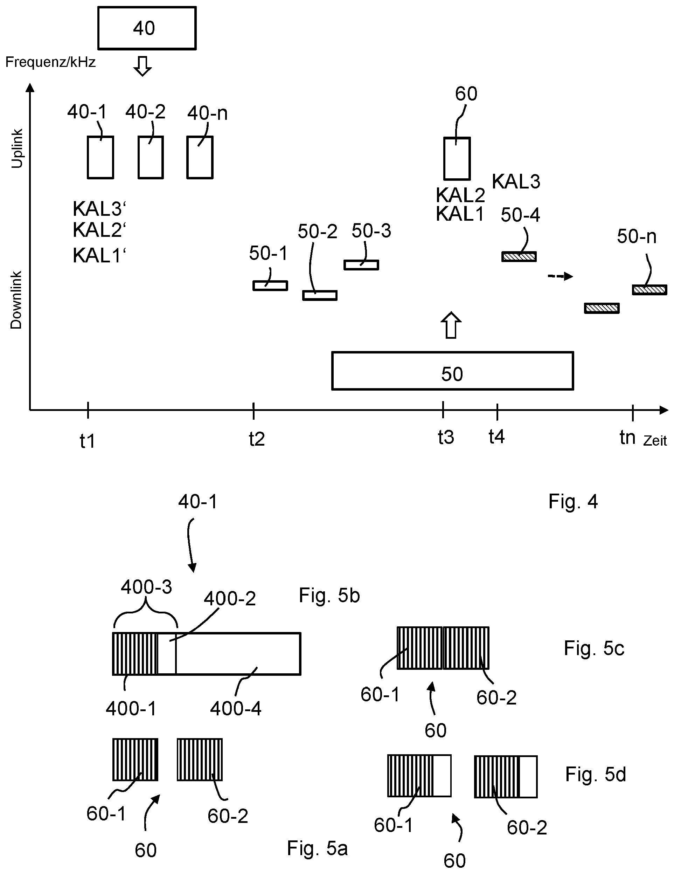

Fig. 4 zeigt beispielhaft und schematisiert die Übertragung eines Telegramms 40 (Nutzdaten) im Uplink sowie eines Telegramms 50 im Anschluss daran im Downlink. Für die Übertragung werden aus dem Telegramm 40 eine Mehrzahl von einzelnen Datenpaketen 40-1 bis 40-n (Häppchen) gebildet, deren Länge jeweils kleiner ist als die Länge des Telegramms 40. Im Knoten 2 wird, wie in Fig. 3 dargestellt, der erste Knotenfrequenzgeber 18 mit höherer Frequenz (Quarz für Trägerfrequenz) und der zweite Knotenfrequenzgeber 21 mit niedrigerer Frequenz aber höherem temperaturbedingten Offset (Quarz für Zeitmessung) gegeneinander vermessen (Kalibrierung KAL1') und die sich daraus ergebene Frequenzabweichung in einem Speicher des jeweiligen Knotens 2 abgespeichert.

Der betreffende Knoten 2 sendet zum Zeitpunkt t1 ein Datenpaket z. B. 40-1, wobei die Trägerfrequenz durch den ersten Knotenfrequenzgeber 18 generiert wird.

Der betreffende Knoten 2 sendet das Datenpaket 40-1, wobei die Zeit t1 von dessen Aussendung durch den zweiten Knotenfrequenzgeber 21 generiert ist und wobei die gemessene Abweichung ermittelt durch die Kalibrierung KAL1' bereits berücksichtigt ist. Die Aussendung des Datenpakets 40-1 verhält sich so, als ob der Zeitpunkt t1 von dessen Aussendung durch ersten Knotenfrequenzgeber 18 generiert worden wäre.

Das Datenpaket 40-1 des Knotens 2 wird von der Basisstation 3 empfangen, wobei mittels einer Frequenzschätzung die Abweichung zwischen dem ersten Knotenfrequenzgeber 18 und dem ersten Basisstationsfrequenzgebers 11 ermittelt und abgespeichert wird (KAL2').

Die Basisstation 3 kann durch Vermessung der Frequenzen des ersten Basisstationsfrequenzgebers 11 und des zweiten Basisstationsfrequenzgebers 12 auch diese Abweichung ermitteln bzw. korrigieren (KAL3') und kann diese (z. B. in ppm) abspeichern.

Der jeweilige Knoten 2 sendet das nächste Datenpaket 40-2 mit einem Korrekturfaktor auf Basis der Abweichung zwischen dem ersten Knotenfrequenzgeber 18 sowie zweiten Knotenfrequenzgeber 21. Mit anderen Worten, der Knoten sendet in der Zeit, als ob die Zeit von dem ersten Knotenfrequenzgeber 18 des Knotens 2 generiert worden ist.

Da die Festlegung des Zeitpunkts des Empfangsfensters der Basisstation 3 für das nächste Datenpaket in der Basisstation 3 nach der Kalibrierung KAL3' gemacht wird, könnte das nächste Empfangsfenster auch nur durch den ersten Basisstationsfrequenzgeber 11 generiert werden.

Aufgrund des Empfangs des letzten Datenpakets kennt die Basisstation 3 die Frequenzabweichung zwischen dem ersten Basisstationsfrequenzgeber 11 und dem ersten Knotenfrequenzgeber 18. Das Empfangsfenster der Basisstation 3 wird so korrigiert, als ob der erste Basisstationsfrequenzgeber 11 mit der gleiche Geschwindigkeit bzw. Frequenz läuft wie der erste Knotenfrequenzgeber 18. Wenn die Temperatur bis zu dem nächsten Datenpaket konstant bleibt, ist zu erwarten, dass das Empfangsfenster perfekt getroffen wird. In der Praxis ändert sich die Temperatur, so dass es zu Abweichungen um z.B. +- 5 ppm kommen kann abhängig von dem Zeitraum dazwischen.

Die Kalibrierungen KAL1' und KAL 3' sind nicht ideal sondern abhängig von der Kalibrierungslänge. Es bleibt somit ein Genauigkeitsrestfehler der Kalibrierung.

Für das Empfangen des nächsten Datenpakets addiert die Basisstation 3 den durch die Abweichung bedingten Zeitversatz zwischen dem ersten Basisstationsfrequenzgeber 11 und dem ersten Knotenfrequenzgeber 18 sowie den Zeitversatz zwischen dem ersten Basisstationsfrequenzgeber 11 und dem zweiten Basisstationsfrequenzgeber 12 hinzu.

Die Kalibrierung zwischen dem ersten Basisstationsfrequenzgeber 11 sowie dem zweiten Basisstationsfrequenzgeber 12 wird während der jeweiligen geöffneten Empfangsfenster in der Basisstation 3 durchgeführt und kann hierdurch länger dauern als im Knoten 2. Hierdurch kann der Restfehler in der Basisstation 3 weiter reduziert werden.

Mit der Erfindung eliminiert man eine Differenz zwischen den Frequenzen der jeweiligen ersten Frequenzgeber 11 sowie 18.

Die Kalibrierung KAL2' zwischen der Frequenz des ersten Knotenfrequenzgebers 18 und der Frequenz des ersten Basisstationsfrequenzgebers 11 kann auch auf Basis einer Schätzung mindestens eines Parameters des vom Kommunikationsmodul 17 ausgesendeten und vom Kommunikationsmodul 10 empfangenen Funksignals aus folgender Parameter-Gruppe
Trägerfrequenz und/oder
Bandbreite und/oder
Datenrate und/oder
Empfangszeit zwischen zwei Datenpaketen und/oder
Frequenzhub und/oder
Modulationsindex
durch das Kommunikationsmodul 10 in der Basisstation 3 ermittelt werden. Ein entsprechendes Verfahren ist in der DE 2016 014 375 A1 beschrieben, auf dessen Inhalt vollumfänglich Bezug genommen wird.

Beispielsweise kann eine Schätzung auch auf Basis mehreren solcher Parameter z. B. auf Basis der Differenz zwischen zwei Trägerfrequenzen oder Empfangszeiten oder auf Basis einer gewichteten Mittelung mehrerer Werte wie z. B. auf Basis einer Filterung von N Trägerfrequenzen vorgenommen werden.

Im Anschluss an die Übertragung der Datenpakete 40-1 bis 40-n im Uplink erfolgt eine Übertragung eines Telegramms 50 von der Basisstation 3 an den jeweiligen Knoten 2, wie in Fig. 4 gezeigt, im Downlink. Entsprechend wird das Telegramm 50 in einzelne Datenpakete (Häppchen) 50-1 bis 50-n, deren Länge jeweils kleiner ist als die Länge des Telegramms 50, aufgeteilt, die, wie in Fig. 4 dargestellt, auf unterschiedlichen Frequenzen übertragen werden können. Alternativ könnten die Datenpakete 50-1 bis 50-n auch auf einer einheitlichen Frequenz versendet werden.

Die Zeitspanne zwischen der letzten Kalibrierung KAL1' des ersten Knotenfrequenzgebers 18 sowie zweiten Knotenfrequenzgebers 21 (um den Zeitpunkts t1 herum) bis zum Empfang des letzten Datenpakets 50-n zum Zeitpunkt tn kann relativ lang sein. Sie kann mehrere Sekunden oder sogar Minuten betragen. Die Temperatur während dieser Zeitspanne beeinflusst insbesondere die Frequenz des zweiten Knotenfrequenzgebers (Zeitquarz) und damit die Position des Zeitfensters des Knotens 2 für den Empfang der Datenpakete 50-1, 50-n. Zudem wird auch die höhere Frequenz (Trägerfrequenz) der ersten Frequenzgeber beeinflusst.

Erfindungsgemäß nimmt der Knoten 2 zwischen zwei Datenpaketen, z. B. zwischen den Datenpaketen 50-3 und 50-4, der einzelnen Datenpakete 50-1 bis 50-n des Telegramms, also beispielsweise zum Zeitpunkt t3, eine erneute Kalibrierung KAL1 des ersten Knotenfrequenzgebers 18 sowie zweiten Knotenfrequenzgebers 21 vor. Damit wird der zweite Knotenfrequenzgeber 21 hinsichtlich seines sich seit der vorherigen Kalibrierung KAL1' ergebenen Fehlers korrigiert. Gleichzeitig versendet der Knoten 2 zum Zeitpunkt t3 ein Zwischenkalibrierungspaket 60 im Uplink an die Basisstation 3. Die Basisstation kann aufgrund des Zwischenkalibrierungspakets 60 somit den Zeitabstand in Bezug auf die Öffnung des Empfangsfensters des Knotens korrigieren.

Beim Versenden des Zwischenkalibrierungspakets 60 kann auch eine Kalibrierung KAL2 des ersten Knotenfrequenzgebers 18 sowie des ersten Basisstationsfrequenzgebers 11 erfolgen, wodurch die Abweichungen der Trägerfrequenz der einzelnen Knoten 2 des Netzwerks zur Frequenz des ersten Frequenzgebers 11 der Basisstation 3 justiert werden können. Hierdurch kann die jeweilige Trägerfrequenz genau justiert werden und somit sichergestellt werden, dass das Downlink-Signal sehr genau in den schmalen Filter der Basisstation hineinpasst. Daraus resultierend kann das Signal-Rausch-Verhältnis des Eingangssignals am Knoten 2 optimiert werden, d. h. ein optimierter Empfang gewährleistet werden.

Darüber hinaus kann in der Basisstation 3 auch eine Justierung KAL3 des ersten Basisstationsfrequenzgebers 11 sowie zweiten Basisstationsfrequenzgebers 12 erfolgen.

Die nach dem Empfang des Zwischenkalibrierungspakets 60 versendeten Datenpakete 50-4 bis 50-n besitzen somit eine deutlich höhere Wahrscheinlichkeit, das Empfangsfenster des jeweiligen Knotens 2 genau zu treffen bzw. bei stark unterdrücktem Rauschen vom jeweiligen Knoten empfangen zu werden. Der zeit- bzw. temperaturbedingte Offset (Verzug) der Zeitfrequenz sowie Trägerfrequenz kann daher in Bezug auf den Empfang von Datenpaketen im Downlink in ganz erheblichem Maße reduziert werden.

Die Erfindung ermöglicht es zudem, die zeitliche Anordnung der einzelnen Datenpakete 50-1 bis 50-n zu spreizen, d. h. auseinander zu ziehen. Hierdurch wiederum können in dem jeweiligen Knoten sowie Basisstation im Vergleich zu bisher deutlich günstigere Energiepuffer verwendet werden, da die elektrische Energie des Energiepuffers zum Senden bzw. zum Empfang der Datenpakete 50-1 bis 50-n anders als bisher nicht mehr über einen vergleichsweise kurzen Zeitraum bereitgestellt werden muss.

Durch die vorher beschriebene Spreizung ist es möglich, die Pausen zwischen zwei Datenpaketen deutlich größer zu machen als bisher. Durch die Erfindung wird es möglich, die Datenpakete 50-1 bis 50-n soweit auseinanderzuziehen, dass die mittlere Pause zwischen zwei Datenpaketen größer 500 ms, vorzugsweise größer 700 ms, besonders vorzugsweise größer 900 ms beträgt.

Das Zwischenkalibrierungspaket 60 hat eine deutlich kürzere Länge als die herkömmliches Uplink Datenpakete 40-1, 40-n, wie dies auch in der Figurenfolge 5a bis 5c dargestellt ist. Dies erhöht zusätzlich die Wahrscheinlichkeit, dass das Zwischenkalibrierungspaket 60 vom jeweiligen Knoten 2 erfolgreich empfangen werden kann.

Fig. 5 zeigt den Aufbau eines Datenpakets beispielhaft anhand des Datenpakets 40-1, welches von dem Knoten 2 im Uplink an die Basisstation 3 übertragen wird. Das Datenpaket umfasst Paketkerndaten 400-3, welche wiederum Piloten 400-1 sowie die jeweilige knotenspezifische ID beinhalten. Der Bereich 400-4 beinhaltet die Paketnutzdaten.

Als Zwischenkalibrierungspaket 60 können beispielsweise lediglich Piloten 60-1, 60-2 d.h. einzelne Pilotsequenzen übermittelt werden. Bei Piloten handelt es sich um Bits bzw. Bitfolgen, die sowohl dem jeweiligen Knoten 2 als auch der Basisstation 3 bekannt sind. Zum Beispiel können als Zwischenkalibrierungspaket 60 zwei Piloten 60-1, 60-2, die in einem definierten Abstand verschickt werden, vorgesehen sein. Beispielsweise können 15 Bit Pilotsequenzen jeweils mit einem 30 Bit Abstand versendet werden. Da Datenpakete üblicherweise mehr als 30 Bit Länge aufweisen, weiß das Kommunikationsmodul 10 bzw. der Sync-Detektion der Basisstation 3, dass es sich bei den empfangenen Piloten 60-1, 60-2 um ein Zwischenkalibrierungspaket 60 handelt.

Alternativ können beispielsweise mehrere, z.B. zwei Pilotsequenzen 60-1, 60-2 unmittelbar also ohne Abstand nacheinander versendet werden, wie dies in Fig. 5c dargestellt ist. Auch daraus kann das Kommunikationsmodul 10 bzw. der Sync-Detektion der Basisstation 3 erkennen, dass es sich um ein Zwischenkalibrierungspaket 60 handelt. Hierbei sollte die Leistung und/oder Trägerfrequenz der Pilotsequenzen ungefähr gleich sein, um sicher zur stellen, dass die Pilotsequenzen von demselben Knoten stammen.

Alternativ kann zusammen mit einem oder mehreren Piloten 60-1, 60-2, wie in Fig. 5d gezeigt, zusätzlich auch noch die ID des jeweiligen Knotens 2 mit versendet werden.

Weiterer Payload ist für das Zwischenkalibrierungspaket 60 nicht notwendig.

Ein Zwischenkalibrierungspaket 60 kann während der Übertragung des Telegramms 50 im Downlink vorzugsweise auch wiederholt zwischen zwei unterschiedlichen Datenpaketen 50-1 bis 50-n gesendet werden. Geht ein Zwischenkalibrierungspaket 60 verloren, kann hierdurch dennoch mit erhöhter Wahrscheinlichkeit eine Kalibrierung während der Übertragung des Telegramms 50 im Downlink erfolgen.

Die Korrektur des Sendezeitpunkts und/oder der Trägerfrequenz der Datenpakete 50-1, 50-n kann in der zeitlichen Abfolge derselben auch mehrfach erfolgen.

Vorzugsweise kann jeweils der Unterschied zwischen einer Kalibrierung des ersten Knotenfrequenzgebers und zweiten Knotenfrequenzgebers und/oder einer Kalibrierung des ersten Knotenfrequenzgebers und des ersten Basisstationsfrequenzgebers und/oder eine Kalibrierung des ersten Basisstationsfrequenzgebers und des zweiten Basisstationsfrequenzgebers einer vorherigen Übertragung von Datenpaketen mit einer entsprechenden nachfolgenden Kalibrierung unter Verwendung eines Zwischenkalibrierungspakets hinsichtlich seines Frequenzunterschieds festgestellt und in der Basisstation und/oder im Knoten berücksichtigt werden. Insbesondere kann der diesbezügliche Unterschied der Kalibrierung des ersten Knotenfrequenzgebers und des ersten Basisstationsfrequenzgebers für die Korrektur der Trägerfrequenz in der Basisstation berücksichtigt werden.

### BEZUGSZEICHENLISTE

- 1: Kommunikationssystem
- 2: Knoten
- 3: Basisstation
- 4: Ladeeinheit (Knoten)
- 5: Energiepuffer (Knoten)
- 6: Sende- und Empfangsteil
- 7: Antenne
- 8: Antenne
- 9: Anzeige
- 10: Kommunikationsmodul (Basisstation)
- 11: erster Basisstationsfrequenzgebers
- 12: zweiter Basisstationsfrequenzgebers
- 13: Mikroprozessor (Basisstation)
- 14: Empfangsfenster
- 15: Speicher
- 16: Batterie
- 17: Kommunikationsmodul (Knoten)
- 18: erster Knotenfrequenzgeber
- 19: Steuer- und Recheneinheit (Knoten)
- 21: zweiter Knotenfrequenzgeber
- 22: Batterie
- 23: Anzeige

- 40: Telegramm-Uplink
- 40-1 bis 40-n: Datenpaket-Uplink

- 50: Telegramm-Downlink
- 50-1 bis 50-n: Datenpaket-Downlink

- 60: Zwischenkalibrierungspaket
- 60-1: Pilotsequenz
- 60-2: Pilotsequenz

- 400-1: Pilotsequenz
- 400-2: ID
- 400-3: Paketkerndaten
- 400-4: Paketnutzdaten

- KAL1': Kalibrierung LF/HF im Knoten
- KAL2': Kalibrierung HF Knoten/HF Basisstation
- KAL3': Kalibrierung LF/HF Basisstation

- KAL1: Kalibrierung LF/HF im Knoten
- KAL2: Kalibrierung HF Knoten/HF Basisstation
- KAL3: Kalibrierung LF/HF Basisstation

## Patentansprüche

1. Verfahren zum Übertragen von Daten, insbesondere Sensordaten, per Funk zwischen zumindest einem, vorzugsweise dauerhaft ortsfest installierten, batteriebetriebenen Knoten (2) und einer Basisstation (3) in einem Kommunikationssystem (1) mit bidirektionalem Funkübertragungsbetrieb,
wobei die Basisstation (3) ein Kommunikationsmodul (10) mit einem ersten Basisstationsfrequenzgeber (11) aufweist,
wobei der Knoten (2) ein Kommunikationsmodul (17) mit einem ersten Knotenfrequenzgeber (18) sowie einem zweiten Knotenfrequenzgeber (21) mit einer niedrigeren Frequenz als derjenigen des ersten Knotenfrequenzgebers (18) aufweist,
wobei das Kommunikationsmodul (17) des Knotens (2) dazu vorgesehen ist, Daten im Uplink an das Kommunikationsmodul (10) der Basisstation (3) zu senden, indem ein Funktelegramm (40) in mindestens zwei Datenpakete, vorzugsweise in eine Vielzahl von Datenpaketen (40-1, 40-n) aufgeteilt wird, die in zeitlichem Abstand nacheinander gesendet und im Empfänger rekombiniert werden,
wobei das Kommunikationsmodul (10) der Basisstation (3) dazu vorgesehen ist, Daten im Downlink an das Kommunikationsmodul (17) des Knotens (2) zu senden, indem ein Funktelegramm (50) in mindestens zwei Datenpakete, vorzugsweise in eine Mehrzahl von Datenpaketen (50-1, 50-n) aufgeteilt wird, die in zeitlichem Abstand nacheinander gesendet und im Empfänger rekombiniert werden,
**dadurch gekennzeichnet, dass**
zwischen den Datenpaketen (50-1, 50-n) ein Zwischenkalibrierungspaket (60) im Uplink an die Basisstation (3) übertragen wird und
zwischen den Datenpaketen (50-1, 50-n) eine Korrektur des Sendezeitpunkts und/oder der Trägerfrequenz mindestens eines der Datenpakete (50-1, 50-n) stattfindet.

2. Verfahren nach Anspruch 1, **dadurch gekennzeichnet, dass**
zwischen den Datenpaketen (50-1, 50-n) eine Kalibrierung (KAL1) des ersten Knotenfrequenzgebers (18) und zweiten Knotenfrequenzgebers (21) stattfindet und/oder
zwischen den Datenpaketen (50-1, 50-n) eine Kalibrierung (KAL2) des ersten Knotenfrequenzgebers (18) und des ersten Basisstationsfrequenzgebers (11) stattfindet.

3. Verfahren nach Anspruch 1 oder 2, **dadurch gekennzeichnet, dass**
das Kommunikationsmodul (10) der Basisstation (3) einen zweiten Basisstationsfrequenzgeber (12) aufweist, dessen Frequenz geringer ist als diejenige des ersten Basisstationsfrequenzgebers (11), und
für die Korrektur eine Kalibrierung (KAL3) des ersten Basisstationsfrequenzgebers (11) und des zweiten Basisstationsfrequenzgebers (12) stattfindet.

4. Verfahren nach Anspruch 2 oder 3, **dadurch gekennzeichnet, dass**
das Zwischenkalibrierungspaket (60) zwischen zwei Datenpaketen der Mehrzahl der Datenpakete (50-1, 50-n) versendet wird.

5. Verfahren nach einem der vorhergehenden Ansprüche 2 bis 4,
**dadurch gekennzeichnet, dass**
als Folge des Empfangs des Zwischenkalibrierungspakets (60) die Basisstation (3) den Sendezeitpunkt und/oder die Trägerfrequenz der nach Erhalt des Zwischenkalibrierungspakets (60) zu erzeugenden Datenpakete (z. B. 50-4, 50-n) nachjustiert.

6. Verfahren nach einem der vorhergehenden Ansprüche 2 bis 5,
**dadurch gekennzeichnet, dass**
als Folge der Kalibrierung (KAL1) des ersten Knotenfrequenzgebers (18) und zweiten Knotenfrequenzgebers (21) der Knoten (2) den Empfangszeitpunkt für die nach Versenden des Zwischenkalibrierungspakets (60) erwarteten Datenpakete (z. B. 50-4, 50-n) nachjustiert.

7. Verfahren nach einem der vorhergehenden Ansprüche 2 bis 6,
**dadurch gekennzeichnet, dass**
bei der Bereitstellung des Zwischenkalibrierungspakets (60) im Knoten die Kalibrierung (KAL1) des ersten Knotenfrequenzgebers (18) und zweiten Knotenfrequenzgebers (21) erfolgt.

8. Verfahren nach einem der vorhergehenden Ansprüche 2 bis 7,
**dadurch gekennzeichnet, dass**
in der Basisstation (3) die Kalibrierung (KAL2) des ersten Knotenfrequenzgebers (18) und des ersten Basisstationsfrequenzgebers (11) beim Empfang des Zwischenkalibrierungspakets (60) erfolgt.

9. Verfahren nach einem der vorhergehenden Ansprüche, **dadurch gekennzeichnet, dass**
bei einer vorherigen Übertragung von Datenpaketen (40-1, 40-n) im Uplink bereits
eine Kalibrierung (KAL1') des ersten Knotenfrequenzgebers (18) und zweiten Knotenfrequenzgebers (21) und/oder
eine Kalibrierung (KAL2') des ersten Knotenfrequenzgebers (18) und des ersten Basisstationsfrequenzgebers (11) und/oder
eine Kalibrierung (KAL3') des ersten Basisstationsfrequenzgebers (11) der und des zweiten Basisstationsfrequenzgebers (12) stattgefunden hat.

10. Verfahren nach einem der vorhergehenden Ansprüche 2 bis 9,
**dadurch gekennzeichnet, dass** ein Zwischenkalibrierungspaket (60) wiederholt versendet wird.

11. Verfahren nach einem der vorhergehenden Ansprüche, **dadurch gekennzeichnet, dass** die Korrektur des Sendezeitpunkts und/oder der Trägerfrequenz der Datenpakete (50-1, 50-n) in der zeitlichen Abfolge derselben mehrfach erfolgt.

12. Verfahren nach einem der vorhergehenden Ansprüche 2 bis 11,
**dadurch gekennzeichnet, dass** das Zwischenkalibrierungspaket (60) kürzer ist als die Datenpakete (z. B. 50-4, 50-n).

13. Verfahren nach einem der vorhergehenden Ansprüche 2 bis 12,
**dadurch gekennzeichnet, dass** als Zwischenkalibrierungspaket (60) ausschließlich
Piloten (60-1, 60-2) und/oder
ID-Daten und/oder
Paketkerndaten
versendet werden, wobei insbesondere vorgesehen ist, dass die Piloten (60-1, 60-2) in einem bestimmten Abstand voneinander oder direkt nacheinander versendet werden.

14. Verfahren nach einem der vorhergehenden Ansprüche, **dadurch gekennzeichnet, dass** die mittlere Pause zwischen zwei Datenpaketen der Datenpakete (50-1, 50-n) größer 500 ms, vorzugsweise größer 700 ms, besonders vorzugsweise größer 900 ms ist.

15. Verfahren nach Anspruch 9, **dadurch gekennzeichnet, dass** ein Unterschied zwischen der Kalibrierung (KAL1') des ersten Knotenfrequenzgebers (18) und zweiten Knotenfrequenzgebers (21) und der Kalibrierung (KAL1) des ersten Knotenfrequenzgebers (18) und zweiten Knotenfrequenzgebers (21) und/oder
ein Unterschied zwischen der Kalibrierung (KAL2') des ersten Knotenfrequenzgebers (18) und des ersten Basisstationsfrequenzgebers (11) und der Kalibrierung (KAL2) des ersten Knotenfrequenzgebers (18) und ersten Basisstationsfrequenzgebers (11)
und/oder
ein Unterschied zwischen der Kalibrierung (KAL3') des ersten Basisstationsfrequenzgebers (11) und des zweiten Basisstationsfrequenzgebers (12) und der Kalibrierung (KAL3) des ersten Basisstationsfrequenzgebers (11) und des zweiten Basisstationsfrequenzgebers (12) festgestellt und in der Basisstation (3) und/oder im Knoten (2) berücksichtigt, insbesondere für die Korrektur der Trägerfrequenzen in der Basisstation (3) berücksichtigt wird.

16. Funkfähiger Knoten (21) zum Übertragen von Daten, insbesondere Sensordaten und/oder Aktordaten, über einen drahtlosen Kommunikationskanal an eine Basisstation (3) umfassend
eine Steuer- und Recheneinheit (19),
einen ersten Knotenfrequenzgeber (18),
einen zweiten Knotenfrequenzgeber (21),
ein Kommunikationsmodul (17) mit Antenne (8) sowie
eine Batterie (22),
**dadurch gekennzeichnet, dass**
die Steuer- und Recheneinheit (19) zum Betrieb des Verfahrens nach mindestens einem der vorhergehenden Ansprüche programmiert ist.

## Claims

1. Method for transmitting data, in particular sensor data, by radio between at least one battery-operated node (2), which is preferably permanently installed at a fixed location, and a base station (3) in a communication system (1) using bidirectional radio transmission operation,
the base station (3) having a communication module (10) having a first base station frequency generator (11),
the node (2) having a communication module (17) having a first node frequency generator (18) and a second node frequency generator (21) with a lower frequency than that of the first node frequency generator (18),
the communication module (17) of the node (2) being intended to transmit data to the communication module (10) of the base station (3) in the uplink by splitting a radio telegram (40) into at least two data packets, preferably into a multiplicity of data packets (40-1, 40-n), which are transmitted successively at intervals of time and are recombined in the receiver,
the communication module (10) of the base station (3) being intended to transmit data to the communication module (17) of the node (2) in the downlink by splitting a radio telegram (50) into at least two data packets, preferably into a plurality of data packets (50-1, 50-n), which are transmitted successively at intervals of time and are recombined in the receiver,
**characterized in that**
an intermediate calibration packet (60) is transmitted to the base station (3) in the uplink between the data packets (50-1, 50-n), and
the transmission time and/or the carrier frequency of at least one of the data packets (50-1, 50-n) is/are corrected between the data packets (50-1, 50-n).

2. Method according to Claim 1, **characterized in that** a calibration (KAL1) for the first node frequency generator (18) and the second node frequency generator (21) takes place between the data packets (50-1, 50-n) and/or
a calibration (KAL2) for the first node frequency generator (18) and the first base station frequency generator (11) takes place between the data packets (50-1, 50-n).

3. Method according to Claim 1 or 2, **characterized in that**
the communication module (10) of the base station (3) has a second base station frequency generator (12), the frequency of which is lower than that of the first base station frequency generator (11), and
a calibration (KAL3) for the first base station frequency generator (11) and the second base station frequency generator (12) takes place for the correction.

4. Method according to Claim 2 or 3, **characterized in that**
the intermediate calibration packet (60) is sent between two data packets of the plurality of data packets (50-1, 50-n).

5. Method according to one of preceding Claims 2 to 4, **characterized in that**
as a result of reception of the intermediate calibration packet (60), the base station (3) readjusts the transmission time and/or the carrier frequency of the data packets (e.g. 50-4, 50-n) to be generated following receipt of the intermediate calibration packet (60).

6. Method according to one of preceding Claims 2 to 5, **characterized in that**
as a result of the calibration (KAL1) of the first node frequency generator (18) and the second node frequency generator (21), the node (2) readjusts the reception time for the data packets (e.g. 50-4, 50-n) expected after the intermediate calibration packet (60) has been sent.

7. Method according to one of preceding Claims 2 to 6, **characterized in that**
provision of the intermediate calibration packet (60) in the node results in the calibration (KAL1) for the first node frequency generator (18) and the second node frequency generator (21) taking place.

8. Method according to one of preceding Claims 2 to 7, **characterized in that**
the calibration (KAL2) for the first node frequency generator (18) and the first base station frequency generator (11) takes place in the base station (3) when the intermediate calibration packet (60) is received.

9. Method according to one of the preceding claims, **characterized in that**
a previous transmission of data packets (40-1, 40-n) in the uplink has already resulted in
a calibration (KAL1') for the first node frequency generator (18) and the second node frequency generator (21) and/or
a calibration (KAL2') for the first node frequency generator (18) and the first base station frequency generator (11) and/or
a calibration (KAL3') for the first base station frequency generator (11) and the second base station frequency generator (12) having taken place.

10. Method according to one of preceding Claims 2 to 9, **characterized in that** an intermediate calibration packet (60) is sent repeatedly.

11. Method according to one of the preceding claims, **characterized in that** the correction of the transmission time and/or the carrier frequency of the data packets (50-1, 50-n) takes place multiple times in the chronological order of same.

12. Method according to one of preceding Claims 2 to 11, **characterized in that** the intermediate calibration packet (60) is shorter than the data packets (e.g. 50-4, 50-n).

13. Method according to one of preceding Claims 2 to 12, **characterized in that** the intermediate calibration packet (60) sent is exclusively
pilots (60-1, 60-2) and/or
ID data and/or
packet core data,
there being provision in particular for the pilots (60-1, 60-2) to be sent at specific intervals from one another or directly successively.

14. Method according to one of the preceding claims, **characterized in that** the mean pause between two data packets of the data packets (50-1, 50-n) is greater than 500 ms, preferably greater than 700 ms, particularly preferably greater than 900 ms.

15. Method according to Claim 9, **characterized in that** a difference between the calibration (KAL1') for the first node frequency generator (18) and the second node frequency generator (21) and the calibration (KAL1) for the first node frequency generator (18) and the second node frequency generator (21)
and/or
a difference between the calibration (KAL2') for the first node frequency generator (18) and the first base station frequency generator (11) and the calibration (KAL2) for the first node frequency generator (18) and the first base station frequency generator (11)
and/or
a difference between the calibration (KAL3') for the first base station frequency generator (11) and the second base station frequency generator (12) and the calibration (KAL3) for the first base station frequency generator (11) and the second base station frequency generator (12) is determined and taken into account in the base station (3) and/or in the node (2), in particular taken into account for the correction of the carrier frequencies in the base station (3).

16. Radio-capable node (21) for transmitting data, in particular sensor data and/or actuator data, to a base station (3) via a wireless communication channel, comprising
a control and computing unit (19),
a first node frequency generator (18),
a second node frequency generator (21),
a communication module (17) with an antenna (8) and
a battery (22),
**characterized in that**
the control and computing unit (19) is programmed to operate the method according to at least one of the preceding claims.

## Revendications

1. Procédé de transmission de données, notamment de données de capteurs, par radio entre au moins un nœud (2) alimenté par batterie, de préférence installé de manière fixe et permanente, et une station de base (3) dans un système de communication (1) avec un mode de transmission radio bidirectionnelle,
la station de base (3) possédant un module de communication (10) avec un premier transmetteur de fréquence de station de base (11),
le nœud (2) possédant un module de communication (17) avec un premier transmetteur de fréquence de nœud (18) ainsi qu'un deuxième transmetteur de fréquence de nœud (21) ayant une fréquence inférieure à celle du premier transmetteur de fréquence de nœud (18),
le module de communication (17) du nœud (2) étant prévu pour envoyer des données en liaison montante au module de communication (10) de la station de base (3) en divisant un radiotélégramme (40) en au moins deux paquets de données, de préférence en une pluralité de paquets de données (40-1, 40-n) qui sont envoyés à intervalles de temps les uns après les autres et recombinés dans le récepteur,
le module de communication (10) de la station de base (3) étant prévu pour envoyer des données en liaison descendante au module de communication (17) du nœud (2) en divisant un radiotélégramme (50) en au moins deux paquets de données, de préférence en une pluralité de paquets de données (50-1, 50-n) qui sont envoyés à intervalles de temps les uns après les autres et recombinés dans le récepteur,
**caractérisé en ce que**
un paquet d'étalonnage intermédiaire (60) est transmis dans la liaison montante à la station de base (3) entre les paquets de données (50-1, 50-n) et
une correction du moment d'émission et/ou de la fréquence porteuse d'au moins l'un des paquets de données (50-1, 50-n) a lieu entre les paquets de données (50-1, 50-n).

2. Procédé selon la revendication 1, **caractérisé en ce que**
un étalonnage (KAL1) du premier transmetteur de fréquence de nœud (18) et du deuxième transmetteur de fréquence de nœud (21) a lieu entre les paquets de données (50-1, 50-n) et/ou
un étalonnage (KAL2) du premier transmetteur de fréquence de nœud (18) et du premier transmetteur de fréquence de station de base (11) a lieu entre les paquets de données (50-1, 50-n).

3. Procédé selon la revendication 1 ou 2, **caractérisé en ce que**
le module de communication (10) de la station de base (3) possède un deuxième transmetteur de fréquence de station de base (12) dont la fréquence est inférieure à celle du premier transmetteur de fréquence de station de base (11), et
un étalonnage (KAL3) du premier transmetteur de fréquence de station de base (11) et du deuxième transmetteur de fréquence de station de base (12) a lieu pour la correction.

4. Procédé selon la revendication 2 ou 3, **caractérisé en ce que**
le paquet d'étalonnage intermédiaire (60) est envoyé entre deux paquets de données de la pluralité de paquets de données (50-1, 50-n).

5. Procédé selon l'une des revendications précédentes 2 à 4, **caractérisé en ce que**
à la suite de la réception du paquet d'étalonnage intermédiaire (60), la station de base (3) réajuste le moment d'émission et/ou la fréquence porteuse des paquets de données (par exemple 50-4, 50-n) à générer après réception du paquet d'étalonnage intermédiaire (60).

6. Procédé selon l'une des revendications précédentes 2 à 5, **caractérisé en ce que**
à la suite de l'étalonnage (KAL1) du premier transmetteur de fréquence de nœud (18) et du deuxième transmetteur de fréquence de nœud (21), le nœud (2) réajuste le moment de réception des paquets de données attendus (par exemple 50-4, 50-n) après l'envoi du paquet d'étalonnage intermédiaire (60).

7. Procédé selon l'une des revendications précédentes 2 à 6, **caractérisé en ce que**
l'étalonnage (KAL1) du premier transmetteur de fréquence de nœud (18) et du deuxième transmetteur de fréquence de nœud (21) est effectué lors de la fourniture du paquet d'étalonnage intermédiaire (60) dans le nœud.

8. Procédé selon l'une des revendications précédentes 2 à 7, **caractérisé en ce que**
l'étalonnage (KAL2) du premier transmetteur de fréquence de nœud (18) et du premier transmetteur de fréquence de station de base (11) est effectué dans la station de base (3) lors de la réception du paquet d'étalonnage intermédiaire (60).

9. Procédé selon l'une des revendications précédentes, **caractérisé en ce que**
lors d'une transmission préalable de paquets de données (40-1, 40-n) dans la liaison montante,
un étalonnage (KAL1') du premier transmetteur de fréquence de nœud (18) et du deuxième transmetteur de fréquence de nœud (21) et/ou
un étalonnage (KAL2') du premier transmetteur de fréquence de nœud (18) et du premier transmetteur de fréquence de station de base (11) et/ou
un étalonnage (KAL3') du premier transmetteur de fréquence de station de base (11) et du deuxième transmetteur de fréquence de station de base (12) a déjà eu lieu.

10. Procédé selon l'une des revendications précédentes 2 à 9, **caractérisé en ce qu'**un paquet d'étalonnage intermédiaire (60) est envoyé de manière répétée.

11. Procédé selon l'une des revendications précédentes, **caractérisé en ce que** la correction du moment d'émission et/ou de la fréquence porteuse des paquets de données (50-1, 50-n) s'effectue plusieurs fois dans la séquence temporelle de ceux-ci.

12. Procédé selon l'une des revendications précédentes 2 à 11, **caractérisé en ce que** le paquet d'étalonnage intermédiaire (60) est plus court que les paquets de données (par exemple 50-4, 50-n).

13. Procédé selon l'une des revendications précédentes 2 à 12, **caractérisé en ce qu'**en tant que paquet d'étalonnage intermédiaire (60) sont envoyés exclusivement
des pilotes (60-1, 60-2) et/ou
des données d'identification et/ou
des données de noyau de paquet,
en prévoyant notamment que les pilotes (60-1, 60-2) sont envoyés à un intervalle déterminé les uns des autres ou directement les uns après les autres.

14. Procédé selon l'une des revendications précédentes, **caractérisé en ce que** la pause moyenne entre deux paquets de données des paquets de données (50-1, 50-n) est supérieure à 500 ms, de préférence supérieure à 700 ms, notamment de préférence supérieure à 900 ms.

15. Procédé selon la revendication 9, **caractérisé en ce qu'**une différence entre l'étalonnage (KAL1') du premier transmetteur de fréquence de nœud (18) et du deuxième transmetteur de fréquence de nœud (21) et l'étalonnage (KAL1) du premier transmetteur de fréquence de nœud (18) et du deuxième transmetteur de fréquence de nœud (21)
et/ou
une différence entre l'étalonnage (KAL2') du premier transmetteur de fréquence de nœud (18) et du premier transmetteur de fréquence de station de base (11) et l'étalonnage (KAL2) du premier transmetteur de fréquence de nœud (18) et du premier transmetteur de fréquence de station de base (11)
et/ou
une différence entre l'étalonnage (KAL3') du premier transmetteur de fréquence de station de base (11) et du deuxième transmetteur de fréquence de station de base (12) et l'étalonnage (KAL3) du premier transmetteur de fréquence de station de base (11) et du deuxième transmetteur de fréquence de station de base (12) est constatée et prise en compte dans la station de base (3) et/ou dans le nœud (2), notamment pour la correction des fréquences porteuses dans la station de base (3).

16. Nœud à fonctionnement radioélectrique (21) destiné à transmettre des données, notamment des données de capteur et/ou des données d'actionneur, par le biais d'un canal de communication sans fil à une station de base (3), comprenant
une unité de commande et de calcul (19),
un premier transmetteur de fréquence de nœud (18),
un deuxième transmetteur de fréquence de nœud (21),
un module de communication (17) avec antenne (8) ainsi que
une batterie (22),
**caractérisé en ce que**
l'unité de commande et de calcul (19) est programmée pour mettre en œuvre le procédé selon au moins l'une des revendications précédentes.
